# EUROPEAN PATENT SPECIFICATION

(11) **EP 0 840 392 B1**
(45) Date of publication and mention of the grant of the patent: **12.03.2003**
(21) Application number: 96830562.3
(22) Date of filing: 05.11.1996
(51) Int. Cl.: H01Q 1/52, H04B 1/38

(54) **Removable radio transceiver station fitted on a mast**
Funkgerät für lösbare Mastmontage
Radioémetteur-récepteur amovible pour montage à un mât

(43) Date of publication of application: 06.05.1998
(73) Proprietor: Bicili, Lorenzo, 06070 San Martino in Colle (Perugia) (IT); Palmieri, Fabio, 60020 Ancona (IT)
(72) Inventor: Bicili, Lorenzo, 06070 San Martino in Colle (Perugia) (IT); Palmieri, Fabio, 60020 Ancona (IT)
(74) Representative: Sassatelli, Franco T., Dr.

(56) References cited:
- FR-A- 1 188 206
- GB-A- 2 295 748
- US-A- 5 373 297
- IBM TDB, vol. 17, no. 1, June 1974, page 13 XP002029650 KORNFELD ET AL: "Isolated Antenna"

## Description

The invention refers to a system to decouple electromagnetically two antennas of a removable radio transceiver station, the first one deriving signals from a remote terminal, the second one radiates the said signals to a new zone to be served; thus enlarging the net broadcasting area; such a system permits that the two antennas can be accommodated one near the other on an only mast to be mounted both on the ground and on a building. GB-A-2 295 748 shows such a radio transceiver station. The said radio transceiver stations are of great importance as they can widen the Italian radio net and in particular the Italian cellular radio-telephone system.

First of all it should be borne in mind that while in lowlands the radio net coverage of the territory can be actuated by means of fixed radio stations, where high ground forms closed spaces such as valleys, gorges, tunnels, etc., thus obstructing the penetration of radio signals, only mobile or removable radio stations can be used but at high cost. In the first case the said high cost is due to mobile operative transceivers the use of which usually depends upon special contingencies ; in the second case high cost is due to the fact that mobile operative transceivers need two distinct operative sections to be mounted at a great distance one from the other, or, alternatively, a barrier, i.e. the body of a building or a high ground such as the top of a mountain to be placed between them.

Such a contrivance is necessary to prevent that the radio signal, which is radiated from the antenna turned towards the remote terminal, is detected by the other aerial radiating the new zone to be served thus blocking the repeater process. The invention is defined by the appended claims. The system provides a device which solves the problem of the electromagnetic decoupling of the two antennas by placing them into special housings with a double-wall case, wherein an outside part reflecting the electromagnetic waves is connected with an inner part which absorbs the said waves; the said housing having some openings so that the first antenna can detect radio signals and the second one can radiate them. By this arrangement the two antennas can be accommodated one near the other on an only mast in a fixed stationary point of the station. Principally, this arrangement improves the amovable transceiver stations fundamentally by means of an equipment to be fitted on a mast located in an only station point. More precisely the present system allows: a) a reduction in the manufacturing costs as only operative radio section is used; b) a great reduction in the assembling costs as the said system can be installed in an only station point and anywhere; c) a simplified radio net planning as the said stations can be located anywhere and no preliminary survey of the zone is necessary to find out the best location thereof.

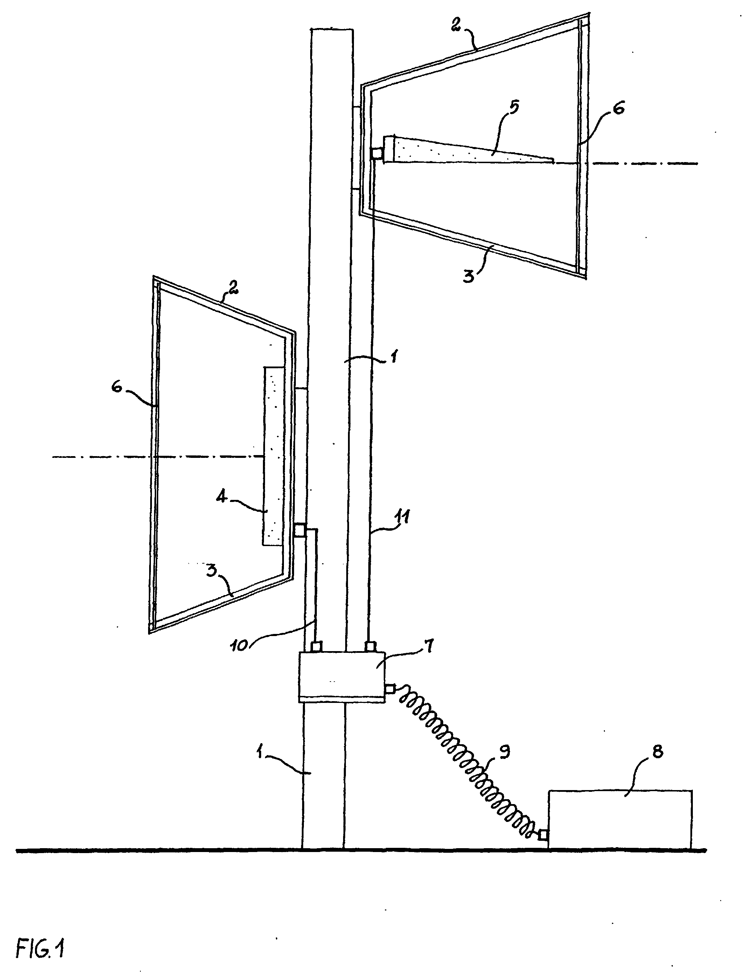

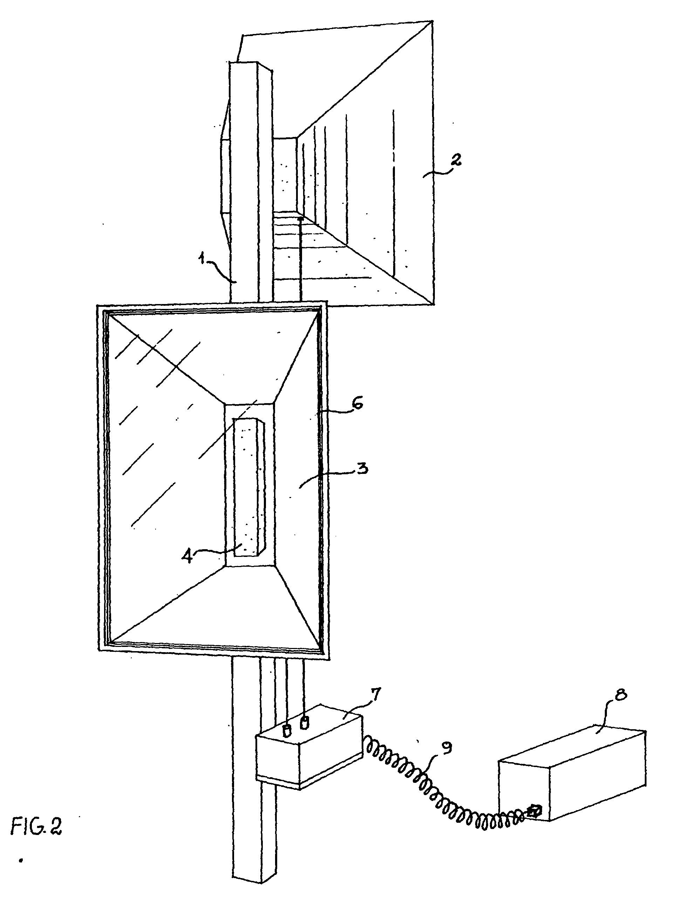

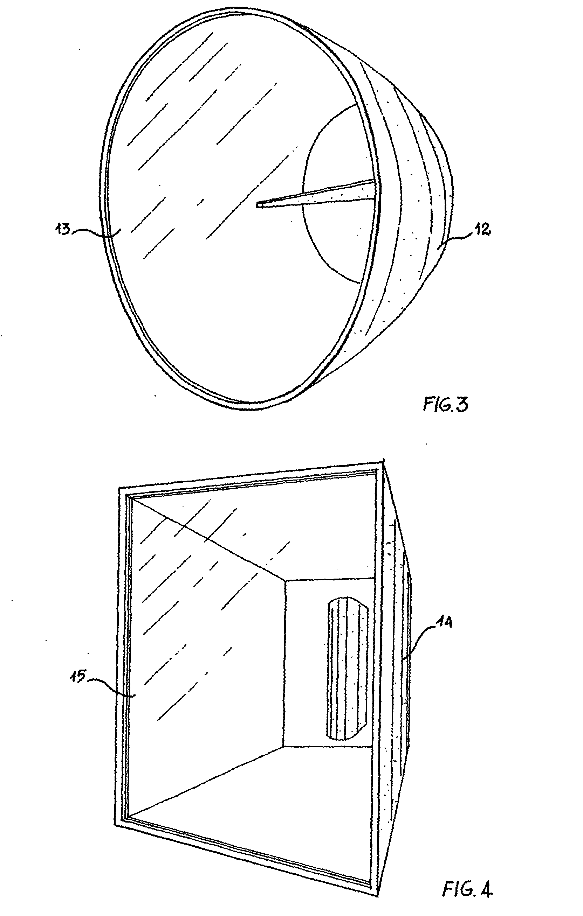

The invented system and the different ways to realize it are illustrated in the drawings. Fig.1 shows a longitudinal section view of a removable station, which is the object of this invention, accommodated on a mast on the ground and featuring two rigid housing structures with a double-body case 2-3 orientated in an opposite direction. Fig. 2 shows a perspective view of the said removable station illustrated in fig. 1. Fig.3 shows a perspective view of a structure with a double-body housing in the shape of a truncated cone 12. Fig. 4 shows a perspective view of a housing structure with a double-body housing in the shape of a truncated pyramid 14.

The system provides-mounted on a support 1 together with the other working parts of the station-two housing rigid cases with a double-body structure and with opening turned outwards. The said housing rigid cases with a double-body structure are formed by an outside part 2 reflecting the electromagnetic waves connected with a inner part 3 which absorbs the said waves; the rigid bodies thereof have centrally located two antennas, the first body has an antenna 4 turned towards a remote terminal to detect radio signals, the second one an antenna 5 which radiates signals to the new zone to be covered. A shield of transparent material 6 seals the opening of the said rigid holding bodies hermetically in order to protect the inner space thereof. In a preferred embodiment the removable transceiver station features two rigid housing bodies with a double-structure 2-3 integral with mast 1 and located in the upper part thereof; one of these housing bodies contains the receiving antenna 4 and the other the radiating antenna 5; below there is a repeater 7 powered by a feeding apparatus 8 by means of cable 9:

From repeater 7, by means of ducts in coaxial cable featuring predeterminating coaxial connectors on both inputs, a first line 10 connects the first antenna 4 while the second line 11 connects the second antenna 5. According to a possible realization of the present invention, the rigid housing bodies can be put into effect with the external side 2 thereof made out in foil and the outside part 3 thereof in a spongy material with a graphitic base. As regards the type of antenna to be installed, the present invention features double-body housing cases with a housing in the shape of a truncated cone' 12 with a transparent wall 13 and double-body holding cases with a housing in the shape of a truncated pyramid 14 with a transparent wall 15.

## Claims

1. Removable radio transceiver station fitted on a mast (1) together with other working parts of the station and providing two rigid housing cases, each with a double-wall structure (2-3) and an opening turned outwards; whereby each of the rigid housing cases with a double-wall structure is formed by an outside wall (2) reflecting the electromagnetic waves connected with an inner wall (3) which absorbs the said waves; whereby each of said rigid housing cases has centrally located an antenna, the first case has its antenna (4) turned towards a remote terminal to detect radio signals, the second one has its antenna (5) turned so that it radiates signals to a new zone to be covered; and where in order to protect the inner space of the cases each opening of the rigid cases is hermetically sealed by a transparent material (6).

2. Removable radio transceiver station fitted on a mast, according to claim 1, **characterized in that** the two rigid housing cases with a double wall structure (2-3) are located in the upper part of the mast (1), one of these housing cases contains the receiving antenna (4) and the other one the radiating antenna (5), whereby below the cases a repeater (7) is powered by a feeding apparatus (8) and fed by means of cable (9); from the repeater (7), by means of coaxial cables featuring predeterminating coaxial connectors on both ends, a first line (10) connects the first antenna (4) while a second line (11) connects the second antenna (5).

3. Removable radio transceiver station fitted on a mast, according to claim 1, **characterized in that** the rigid housing cases are realized with the outside wall (2) thereof made of foil and the inner wall (3) thereof made of a spongy material with a graphitic base.

4. Removable radio transceiver station fitted on a mast, according to claim 1, **characterized in that** the rigid housing cases are provided either in the shape of a truncated cone (12) with a transparent wall( 13) or in the shape of a truncated pyramid (14) with a transparent wall (15).

## Patentansprüche

1. Funkgerät für lösbare Mastmontage, das gemeinsam mit weiteren Betribseinheiten des Gerätes an einem Mast (1) montiert ist und zwei starre Aufnähmegehäuse bereitstellt, wobei jedes mit einer Doppelwandstruktur (2-3) und einer nach außen gewandten Oeffnung versehen ist; wobei jedes der starren Aufnahmegehäuse mit einer Doppelwandstruktur von einer die elektromagnetischen Wellen reflektierenden Außenwand (2) gebildet ist, die mit einer Innenwand (3) verbunden ist, die besagte Wellen absorbiert; wobei jedes besagter starrer Aufnahmegehäuse eine zentral angeordnete Antenne aufweist, wobei die Antenne (4) des ersten Gehäuses zur Detektion von Funksignalen in Richtung zu einem fernen Endgerät gewandt ist, die Antenne (5) des zweiten so gewandt ist, daß sie Signale zu einem abzudeckenden neuen Gebiet ausstrahlt; und wo zum Schutz des Innenraums der Gehäuse jede Oeffnung der starren Gehäuse durch ein transparentes Material (6) hermetisch abgedichtet ist.

2. Funkgerät fur lösbare Mastmontage nach Anspruch 1, **dadurch gekennzeichnet, daß** die zwei starren Aufnahmegehäuse mit einer Doppelwandstruktur (2-3) in dem oberen Teil des Mastes (1) angeordnet sind, wobei eines dieser Aufnahmegehäuse die Empfangsantenne (4) und das andere die Sendeantenne (5) enthält, wobei unter den Gehäusen ein Zwischenverstärker von einem Versorgungsgerät (8) angetrieben und mittels eines Kabels (9) versorgt wird; wobei vom Zwischenverstärker (7) eine erste Leitung (10) mittels Koaxialkabel, die vorbestimmte Koaxialstecker and beiden Enden aufweisen, die erste Antenne (4) verbindet, während eine zweite Leitung (11) die zweite Antenne (5) verbindet.

3. Funkgerät fur lösbare Mastmontage nach Anspruch 1, **dadurch gekennzeichnet, daß** die starren Aufnahmegehäuse derart realisiert sind, daß deren Außenwand (2) aus Folie hergestellt ist und deren Innenwand (3) aus einem nachgiebigen Material mit einer Graphitbasis hergestellt ist.

4. Funkgerät für lösbare Mastmontage nach Anspruch 1, **dadurch gekennzeichnet, daß** die starren Aufnahmegehäuse entweder in Gestalt eines stumpfen Kegels (12) mit einer transparenten Wand (13) oder in Gestalt einer stumpfen Pyramide (14) mit einer transparenten Wand (15) vorgesehen sind.

## Revendications

1. Radioémetteur-récepteur amovible pour montage à un mât (1) ensemble avec d'autres parties actives de la station et fournissant deux boîtiers rigides, chacun avec une structure de double murs (2,3) et une ouverture tournée vers l'extérieur; dans laquelle chacun des boîtiers rigides avec une structure de double murs, est formé par un mur extérieur (2) réfléchissant les ondes électromagnétiques connecté avec un mur intérieur (3), qui absorbe lesdites ondes; dans laquelle chacun desdits boîtiers rigides à une antenne positionnée de manière centrale, le premier boîtier a son antenne (4) tournée vers un terminal distant pour détecter des signaux radio, le second a son antenne (5) tournée de manière à ce qu'elle émette par rayonnement des signaux vers une nouvelle zone à couvrir; et dans laquelle manière à protéger l'espace intérieur de chaque bottier, chaque ouverture des bottiers rigides est hermétiquement scellée avec un matériau transparent (6).

2. Radioémetteur-récepteur amovible pour montage à un mât selon la revendication 1, **caractérisé en ce que** les deux boîtiers rigides avec une structure de double murs (2,3) sont positionnés sur la partie supérieure du mât (1), l'un desdits boîtiers contenant l'antenne réceptrice (4) et l'autre l'antenne émettrice (5), dans lequel sous le boftier, un récepteur (7) est alimenté par un appareil d'alimentation (8) et au moyen d'un cable (9); à partir du récepteur (7), aux moyens de câbles coaxiaux s'adaptant dans des connecteurs coaxiaux prédéterminés sur chaque extrémité, une première ligne (10) connecte la première antenne (4), tandis qu'une seconde ligne (11) connecte la seconde antenne (5).

3. Radioémetteur-récepteur amovible pour montage à un mât selon la revendication 1, **caractérisé en ce que** les boitiers rigides sont réalisés avec le mur extérieur (2) fait d'une feuille d'aluminium de recouvrement et le mur intérieur (3) fait d'un matériau spongieux avec une base graphitique.

4. Radioémetteur-récepteur amovible pour montage à un mât selon la revendication 1, **caractérisé en ce que** les boîtiers rigides (5) sont fournis soit sous la forme de cônes tronqués (12) avec un mur transparent (13), soit sous la forme de pyramides tronquées avec un mur transparent (15).
